# EUROPEAN PATENT APPLICATION

(11) **EP 3 117 985 A1**
(43) Date of publication of application: **18.01.2017**
(21) Application number: 15176487.5
(22) Date of filing: 13.07.2015
(51) Int. Cl.: B29C 70/68, B29C 67/00, B33Y 10/00, B33Y 30/00, B29C 51/00

(54) **ADDITIVE MANUFACTURING SYSTEM AND METHOD FOR PERFORMING ADDITIVE MANUFACTURING ON THERMOPLASTIC SHEETS**

(71) Applicant: Airbus Operations GmbH, 21129 Hamburg (DE)
(72) Inventor: Herrmann, Axel Siegfried, 21129 Hamburg (DE); Fette, Marc, 21129 Hamburg (DE); Born, Johannes, 21129 Hamburg (DE)
(74) Representative: Isarpatent

(57) **Abstract**

An additive manufacturing, AM, system (10, 20), comprises a platform (5a) including a mold die (1) mounted on the platform (5a), the mold die (1) having a surface shape corresponding to a mold cavity used for thermoforming a thermoplastic sheet (B), and an AM assembly configured to perform an AM method on a thermoplastic sheet (B) having been thermoformed with the mold die (1). A method (M) for performing additive manufacturing, AM, on a thermoplastic sheet (B), comprises the steps of thermoforming (M1) a thermoplastic sheet (B) using a mold die (1), and performing (M2) an AM method on the thermoformed thermoplastic sheet (B) in the mold die (1) as a substrate.

## Description

The present invention relates to an additive manufacturing system and a method for performing additive manufacturing on thermoplastic sheets, in particular by using additive layer manufacturing (ALM), selective laser sintering (SLS) and/or fused deposition modelling (FDM) processes for fabricating a functional structure on organosheets.

Carbon fibre reinforced plastics (CFRP) and glass fibre reinforced plastics (GFRP) are widely used in automotive, aerospace and shipbuilding industries, as well as for load-bearing elements of machines and appliances. In order to enhance their applicability and flexibility, overmoulding processes for thermoplastic FRP components have been developed in which thermoformed continuous fibre fabrics are embedded within a thermoplastic matrix system and subsequently overmoulded by an injection moulding process.

Such overmoulded thermoplastic FRP components help to save weight while maintaining substantially the same load-bearing properties as metallic components. Document DE 10 2012 008 369 A1 discloses a method for manufacturing a functional component in additive manufacturing processes on a formed support structure. Document EP 2 801 512 A1 discloses a composite structure for the automotive industries having a sheet-like base structure and a functional structure formed on the base structure by additive manufacturing processes.

One object of the invention is therefore to provide solutions for manufacturing lightweight components, particularly for use in aerospace industries, which are optimized in design, better adaptable to the desired functionality and still having high mechanical performance with regard to stability, rigidity and reinforcement.

This object is achieved by an additive manufacturing system having the features of claim 1, and a method for performing additive manufacturing on thermoplastic sheets having the features of claim 9.

A first aspect of the invention hence pertains to an additive manufacturing system comprising a platform including a mold die mounted on the platform, the mold die having a surface shape corresponding to a mold cavity used for thermoforming a thermoplastic sheet, and an AM assembly configured to perform an AM method on a thermoplastic sheet having been thermoformed with the mold die.

According to a second aspect of the invention, a method for performing additive manufacturing on thermoplastic sheets comprises thermoforming a thermoplastic sheet using a mold die, and performing an AM method on the thermoformed thermoplastic sheet in the mold die as a substrate.

The idea on which the present invention is based is to integrate additive manufacturing methods (AM), such as for example selective laser sintering (SLS), fused deposition modelling (FDM) or selective laser melting (SLM), into the fabrication of fibre reinforced plastic (FRP) components which are thermoformed from thermoplastic sheets. By adapting the AM processes to thermoplastic sheets as support structure, highly complex functional geometries may be manufactured as supplementary structures on the thermoplastic sheets , leading to a high degree of structural complexity, freedom of design and intricate functional integration. The thermoplastic sheets may in particular be organosheets.

Organic sheets and organic sheet profiles (sometimes also called "organosheets") as specific instances of thermoplastic sheets are semi-finished products made from fibre-reinforced thermoplastic which are initially formed as a planar component. An organic sheet or organosheet includes a thermoplastic matrix which is reinforced by non-woven scrim, woven fabric, or a unidirectional fabric. For example, unidirectional fabrics may include glass fibers, carbon, aramid, or a combination of the latter.

Organic sheet or organosheet profiles may contain fibres in axial alignment so that, during a thermoforming process of the organic sheet in a moulding cavity, the blank plastic profile aligns with the cavity walls along the direction of the fibre extension. This way, the fibres remain stretched and buckling or bulging of the fibre bundles in a lateral direction is largely prevented. The mechanical properties of the organosheet may advantageously be preserved throughout the when the deformation process.

Among the several advantages of such composite parts of thermoplastic sheet substrates and AM fabricated functional structures are the lightweight design and the high mechanical stability. The cycle times for fabricating the functionally enhanced thermoplastic sheets in that manner are significantly reduced, as well as the lead time for the design and production processes and the energy consumption during the fabrication. The material usage is optimized in AM methods since there is little to no waste material during the fabrication.

The solution of the invention offers great advantages for 3D printing or additive manufacturing (AM) technology since 3D components or objects may be printed without the additional need for subjecting the components or objects to further processing steps such as milling, cutting or drilling. This allows for a more efficient, material saving and time saving manufacturing process for objects.

Particularly advantageous in general is the reduction of costs, weight, lead time, part count and manufacturing complexity coming along with employing AM technology for printing functionally enhanced, thermoplastic sheet based components. Moreover, the geometric shape of the printed thermoplastic sheet based components may be flexibly designed with regard to the intended functionality and desired purpose.

According to an embodiment of the AM system, the AM system may be configured to perform fused deposition modelling, FDM, selective laser melting, SLM, or selective laser sintering, SLS.

According to another embodiment of the AM system, the thermoplastic sheet may comprise an organosheet.

According to another embodiment of the AM system, the AM assembly may comprise an extrusion assembly configured to build up a functional structure on top of the thermoformed thermoplastic sheet by fused deposition modelling, FDM.

According to an alternative embodiment of the AM system, the AM assembly may comprise at least one laser configured to emit a laser beam, and at least one optical redirection device configured to selective redirect the laser beam to predetermined regions on the thermoformed thermoplastic sheet. In one further embodiment, the AM assembly may comprise at least two lasers configured to emit a laser beam, and at least two optical redirection devices configured to selective redirect the laser beam to predetermined regions on the thermoformed thermoplastic sheet. The accessible range of angles of incident of the laser beams of the at least two lasers are in this case at least partly different.

According to another embodiment of the AM system, the AM assembly may further comprise a working chamber in which the platform is located as an elevatable platform, a powder reservoir configured to hold powder for selective laser melting, SLM, or selective laser sintering, SLS, and a levelling roller configured to transfer powder from the powder reservoir to the surface of the thermoplastic sheet in the mold die.

According to another embodiment of the AM system, the AM system may further comprise a vibration generator coupled to the elevatable platform and configured to vibrate the elevatable platform.

According to an embodiment of the method, the AM method may comprise electron beam melting, EBM, selective laser melting, SLM, or selective laser sintering, SLS.

According to another embodiment of the AM system, the thermoplastic sheet may comprise an organosheet.

According to another embodiment of the method, thermoforming the thermoplastic sheet may comprise vacuum thermoforming, mechanical thermoforming or pressure thermoforming.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates an additive manufacturing system according to an embodiment of the invention.
Fig. 2 schematically illustrates an additive manufacturing system according to another embodiment of the invention.
Fig. 3 schematically illustrates various processing stages during production of a functionally enhanced, thermoplastic sheet based component using the additive manufacturing system of Fig. 2 according to another embodiment of the invention.
Fig. 4 schematically illustrates a flow diagram of a method for performing additive manufacturing on thermoplastic sheets according to another embodiment of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

Additive layer manufacturing (ALM), selective laser sintering (SLS) and fused deposition modelling (FDM) techniques, generally termed as 3D printing techniques, may be used in procedures for building up three-dimensional solid objects based on digital model data. 3D printing is currently used for prototyping and distributed manufacturing with multiple applications in engineering, construction, industrial design, automotive industries and aerospace industries.

Free form fabrication (FFF), direct manufacturing (DM), fused deposition modelling (FDM), powder bed printing (PBP), laminated object manufacturing (LOM), stereolithography (SL), selective laser sintering (SLS), selective laser melting (SLM), selective heat sintering (SHS), electron beam melting (EBM), direct ink writing (DIW), digital light processing (DLP) and additive layer manufacturing (ALM) belong to a general hierarchy of additive manufacturing (AM) methods. Those systems are used for generating three-dimensional objects by creating a cross-sectional pattern of the object to be formed and forming the three-dimensional solid object by sequentially building up layers of material. Any of such procedures will be referred to in the following description as AM or 3D printing without loss of generality. AM or 3D printing techniques usually include selectively depositing material layer by layer, selectively fusing or solidifying the material and removing excess material, if needed.

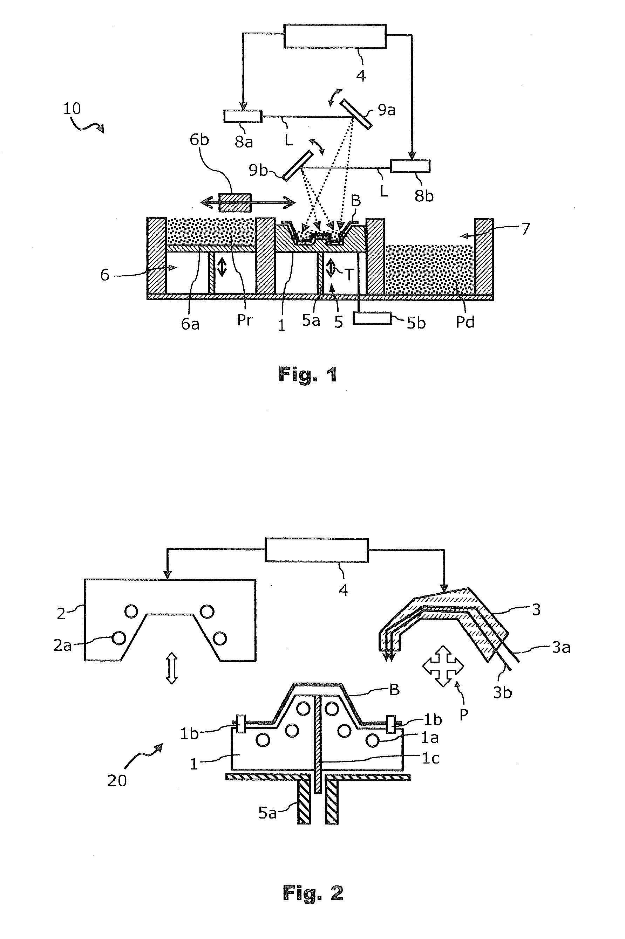

Fig. 1 schematically illustrates an exemplary additive manufacturing system 10. The additive manufacturing system 10 may generally comprise an additive manufacturing assembly for performing an additive manufacturing method, for example selective laser sintering (SLS), selective laser melting (SLM) or stereolithography (SLA). In the following, the details and functionality of the additive manufacturing assembly will be explained without loss of generality with regard to SLS.

The additive manufacturing assembly generally comprises components and parts which are needed to perform the additive manufacturing method on top of a substrate. The additive manufacturing assembly as shown in Fig. 1 may for example include an optical laser scanning system with lasers 8a, 8b and corresponding optical redirection devices 9a, 9b, and a powder transfer system with a powder reservoir 6, a working chamber 5 and a waste powder container 7.

An energy source, such as for example a CO₂ laser 8a sends out an energy beam onto a region of a powder surface of powder material in a working chamber 5 of the additive manufacturing system 10. The energy beams may be controlled in their impact location, for example using an optical redirection device or scanner module. The scanner module may for example comprise a movable and/or rotatable mirror 9a or optical mirror assembly. Depending on the position of the mirror 9a, the laser beam L is directed onto a predetermined are of the powder material.

At the location of impact of the energy or laser beam L, the powder gets heated, locally melted and agglomerates upon cooling down again. Based on a digital 3D printing model which may be provided and/or modified by a CAD system, the laser beam L is directed in a predetermined pattern over the powder material surface. After the selective melting/sintering and local agglomeration of the powder material particles in the surface layer of the powder material, excess, non-agglomerated powder Pd is transferred into a waste material container 7, for example by means of a levelling roller 6b or any other suitable squeegee or scraper. The levelling roller 6b moves over the surface of the powder material between the working chamber, the waste material container 7 and a powder reservoir 6.

After one layer of powder has been selectively agglomerated, the levelling roller 6b may be used to transfer new powder Pr from the powder reservoir 6 with a reservoir platform 6a to the working chamber 5. The powder Pr in the powder reservoir 6 may additionally be pre-heated using infrared light in order to have the temperature of the powder reach a working temperature just below the melting temperature of the powder material so that the selective laser sintering procedure may be sped up. The working chamber 5 includes an elevatable platform 5a that may be moved in a vertical direction T. For transferring new powder Pr to the working chamber 5, the elevatable platform 5a is moved downwards by a certain margin roughly corresponding to the height of the previously agglomerated powder layer. Then, the process of heating, melting/sintering and agglomerating by means of the laser beam L is iterated.

The additive manufacturing system 10 includes an integrated thermoforming system. To that end, the elevatable platform 5a is equipped with a mold die 1 having a surface shape corresponding to a mold cavity used for thermoforming a thermoplastic sheet B, such as for example an organosheet B. The elevatable platform 5a with the mold die 1 is configured to perform a thermoforming procedure involving shaping the flat thermoplastic sheet B by first softening the sheet by pre-heating it and then thermoforming the softened sheet B in the mold cavity.

Thermoforming the sheet B with the mold die 1 on the elevatable platform 5a may for example be done by vacuum thermoforming, mechanical thermoforming or pressure thermoforming. The required additional components of the thermoforming system are not explicitly shown in Fig. 1 for reasons of clarity.

Vacuum thermoforming may involve laying up the softened flat sheet B on the mold die 1, clamping it at the edges of the mold die 1 and then creating an underpressure in the cavity formed between the mold die 1 and the flat sheet B, for example by evacuation channels formed within the mold die 1 that are connected to a vacuum pump for creating the underpressure. The atmospheric pressure on the top of the flat sheet B then forces the softened sheet to deform in conformity with the cavity shape of the mold die 1. After the formed sheet B has aligned with the cavity shape of the mold die 1, the thermoformed sheet B may be cooled down and hardened. This may for example be done by cooling down the mold die 1.

As an alternative, mechanical thermoforming may involve laying up the softened flat sheet B on the mold die 1 and then pushing down the sheet B onto the mold die 1 by mechanical force. The mechanical force may for example be exerted using a core plug having a corresponding negative cavity surface to the molding surface of the mold die 1. The core plug forces the softened sheet B to fill the space between the core plug and the mold die 1. Again, the sheet B is cooled down to harden in the outer form that is determined by the cavity between the core plug and the mold die 1.

Finally, pressure thermoforming may involve laying up the softened flat sheet B on the mold die 1, clamping it at the edges of the mold die 1 and then exerting an overpressure on top of the clamped sheet B. This may for example be done using a sealed off pressure dome that is arranged on top of the sheet B and seals off the clamped edges of the sheet B. Then, pressurized air is blown into the dome, thereby forcing the softened sheet B down onto the mold die 1 in order to have the sheet B align with the cavity shape of the mold die 1. After the formed sheet B has aligned with the cavity shape of the mold die 1, the thermoformed sheet B may be cooled down and hardened. This may for example be done by cooling down the mold die 1.

What is shown in Fig. 1 is the already thermoformed sheet B that conforms to the cavity shape of the mold die 1. The sheet B may serve as a substrate for the additive manufacturing process in the additive manufacturing system 10. With the additive manufacturing procedure such as SLS, SLM or SLA as described above, a three-dimensional functional structure formed with sintered powder may be formed on top of the thermoformed sheet B. By continuously lowering the elevatable platform 5a with the mold die 1 and the thermoformed sheet B, the functional structure is produced layer-by-layer according to the underlying modelling data used for controlling the laser beam L.

Since the thermoformed sheet B does not provide a substantially flat substrate surface for the powder, some regions of the thermoformed sheet B may not adequately be covered with powder transferred onto the sheet B with the levelling roller 6b. To combat powder distribution problems, the additive manufacturing system 10 may additionally comprise a vibration generator 5b that is coupled to the mold die 1 and that is configured to vibrate the mold die 1 between the layer-by-layer AM processing. Once fresh powder has been transferred to the thermoformed sheet B, the powder may be evenly distributed over the surface of the sheet B by means of the vibration. Of course, the duration and intensity of the vibration needs to be adjusted to the cavity shape of the mold die 1 in order to achieve optimal powder distribution.

Furthermore, the thermoformed sheet B may comprise protrusions and/or undercuts due to the cavity shape of the mold die 1 which may in some instances be difficult to reach by the laser beam L, mainly due to the range of the possible angles of incidence of the laser beam L which is largely determined by the geometric arrangement of the mirror 9a or mirror assembly. To combat accessibility problems during the AM processing, the additive manufacturing system 10 may further comprise one or more additional energy sources such as a laser 8b and corresponding mirrors 9b or mirror assemblies. The additional laser(s) 8b and mirror(s) 9b may in particular be arranged in a different geometric arrangement than the laser 8a and mirror 9a so that the available range of possible angles of incidence for at least one of the laser beams L is broadened. That way, even powder obscured by undercuts or protrusions in the thermoformed sheet B may be adequately subject to the AM processing. To that end, the additive manufacturing system 10 may select one of the lasers 8a and 8b for SLS, SLM or SLA processing, depending on the accessibility of the powder region in question.

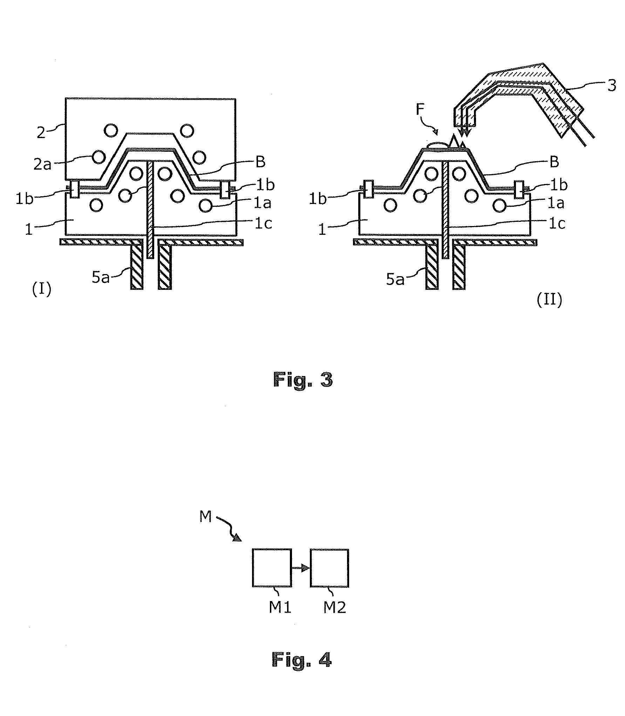

Fig. 2 schematically illustrates another exemplary additive manufacturing system 20. The additive manufacturing system 20 may generally comprise an additive manufacturing assembly for performing an additive manufacturing method, for example fused deposition modelling (FDM). In the following, the details and functionality of the additive manufacturing assembly will be explained without loss of generality with regard to FDM. Fig. 3 schematically illustrates various processing stages (I) and (II) during production of a functionally enhanced, thermoplastic sheet based component using the additive manufacturing system 20 of Fig. 2.

The additive manufacturing assembly generally comprises components and parts which are needed to perform the FDM method on top of a substrate. The additive manufacturing assembly as shown in Fig. 2 may for example include an extrusion assembly 3 that is configured to build up a functional structure F on top of a substrate by means of FDM.

The extrusion assembly 3 may be equipped with a liquefier head connected to two material channels 3a, 3b that are configured to transport printing material and substrate material in filaments or wires to the liquefier head for depositing the printing and/or substrate material on the substrate to be printed upon. The filaments or wires are supplied to an extrusion nozzle in the liquefier head. The nozzle is heated to melt the filament or wire material past the liquefying temperature in order to deposit the filament or wire material on the substrate.

The liquefier head may be moved in both horizontal and vertical directions (indicated by the arrows at P) using a controller 4. The liquefier head may follow a deposition path on the basis of a digital 3D printing model which may be provided and/or modified by a CAD system. The extrusion assembly 3 builds up a functional structure F on a thermoformed thermoplastic sheet B as illustrated in Fig. 3(II).

The additive manufacturing system 20 includes an integrated thermoforming system. To that end, a platform 5a is equipped with a mold die 1 having a surface shape corresponding to a mold cavity used for thermoforming a thermoplastic sheet B, such as for example an organosheet B. The platform 5a with the mold die 1 is configured to perform a thermoforming procedure involving shaping the flat thermoplastic sheet B by first softening the sheet by pre-heating it and then thermoforming the softened sheet B in the mold cavity.

Thermoforming the sheet B with the mold die 1 on the platform 5a may for example be done by vacuum thermoforming, mechanical thermoforming or pressure thermoforming.

Vacuum thermoforming may involve laying up the softened flat sheet B on the mold die 1, clamping it at the edges of the mold die 1 using claims 1b and then creating an underpressure in the cavity formed between the mold die 1 and the flat sheet B, for example by evacuation channels 5a formed within the mold die 1 that are connected to a vacuum pump for creating the underpressure. The atmospheric pressure on the top of the flat sheet B then forces the softened sheet to deform in conformity with the cavity shape of the mold die 1. After the formed sheet B has aligned with the cavity shape of the mold die 1, the thermoformed sheet B may be cooled down and hardened. This may for example be done by cooling down the mold die 1 using heating/cooling fluid channels 1a within the die 1.

As an alternative, mechanical thermoforming may involve laying up the softened flat sheet B on the mold die 1 and then pushing down the sheet B onto the mold die 1 by mechanical force. The mechanical force may for example be exerted using a core plug 2 having a corresponding negative cavity surface to the molding surface of the mold die 1. The core plug 2 which may include heating/cooling fluid channels 2a forces the softened sheet B to fill the space between the core plug and the mold die 1. Again, the sheet B is cooled down to harden in the outer form that is determined by the cavity between the core plug 2 and the mold die 1 as illustrated in conjunction with Fig. 3(I).

The already thermoformed sheet B conforming to the cavity shape of the mold die 1 may then serve as a substrate for the FDM process in the additive manufacturing system 20 using the extrusion assembly 3 as explained above. Both the extrusion assembly 3 as well as the thermoforming process using the core plug 2 may be performed under control of a controller 4 of the additive manufacturing system 20. Fig. 4 shows a schematic illustration of a flow diagram of a method M for performing additive manufacturing (AM) on thermoplastic sheets, particularly organosheets. The method M may in particular be used in one of the additive manufacturing systems 10 and 20 as exemplarily shown in Figs. 1, 2 and 3 for producing functionally enhanced, thermoplastic sheet based components.

At M1, a thermoplastic sheet B is thermoformed using a mold die 1. The thermoformed thermoplastic sheet B is left in the mold die to perform an AM method on the thermoformed thermoplastic sheet B in the mold die 1 as a substrate in a step M2. Thermoforming the thermoplastic sheet B may comprise any suitable thermoforming process such as vacuum thermoforming, mechanical thermoforming or pressure thermoforming. The AM method of step M2 may comprise fused deposition modelling, FDM, selective laser melting, SLM, or selective laser sintering, SLS.

The method M may be transcribed into computer-executable instructions on a computer-readable medium which, when executed on a data processing apparatus, cause the data processing apparatus to perform the steps of the method. Particularly, the computer-executable instructions for executing the method M may be implemented in STL file or similar format which may be processed and executed using 3D printers, AM tools and similar rapid prototyping equipment integrated into an AM system with thermoforming capabilities for thermoforming thermoplastic sheets as substrate for the AM.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference numerals and signs

- 1: Mold die
- 1a: Heating/cooling fluid channels
- 1b: Clamps
- 2: Core plug
- 2a: Heating/cooling fluid channels
- 3: Extrusion assembly
- 3a: Printing material
- 3b: Substrate material
- 4: Controller
- 5: Working chamber
- 5a: Platform
- 5b: Vibration generator
- 6: Powder reservoir
- 6a: Powder platform
- 6b: Levelling roller
- 7: Waster powder container
- 8a: Laser
- 8b: Laser
- 9a: Mirror
- 9b: Mirror
- 10: Additive manufacturing system
- 20: Additive manufacturing system
- B: Thermoplastic sheet
- F: Functional structure
- L: Laser beam
- M: Method
- M1: Method step
- M2: Method step
- P: Movement directions
- Pr: Powder
- Pd: Waste powder
- T: Vertical elevation

## Claims

1. Additive manufacturing, AM, system (10; 20), comprising:
a platform (5a) including a mold die (1) mounted on the platform (5a), the mold die (1) having a surface shape corresponding to a mold cavity used for thermoforming a thermoplastic sheet (B); and
an AM assembly configured to perform an AM method on a thermoplastic sheet (B) having been thermoformed with the mold die (1).

2. AM system (10; 20) according to claim 1, wherein the AM method comprises fused deposition modelling, FDM, selective laser melting, SLM, or selective laser sintering, SLS.

3. AM system (20) according to one of the claims 1 and 2, wherein the thermoplastic sheet (B) comprises an organosheet.

4. AM system (20) according to one of the claims 1 to 3, wherein the AM assembly comprises:
an extrusion assembly (3) configured to build up a functional structure (F) on top of the thermoformed thermoplastic sheet (B) by fused deposition modelling, FDM.

5. AM system (10) according to one of the claims 1 to 3, wherein the AM assembly comprises:
at least one laser (8a; 8b) configured to emit a laser beam (L); and
at least one optical redirection device (9a; 9b) configured to selective redirect the laser beam (L) to predetermined regions on the thermoformed thermoplastic sheet (B).

6. AM system (10) according to claim 5, wherein the AM assembly comprises:
at least two lasers (8a, 8b) configured to emit a laser beam (L); and
at least two optical redirection devices (8a, 8b) configured to selective redirect the laser beam (L) to predetermined regions on the thermoformed thermoplastic sheet (B),
wherein the accessible range of angles of incident of the laser beams (L) of the at least two lasers (8a, 8b) are at least partly different.

7. AM system (10) according to one of the claims 5 and 6, wherein the AM assembly further comprises:
a working chamber (5) in which the platform (5a) is located as an elevatable platform (5a);
a powder reservoir (6) configured to hold powder (Pr) for selective laser melting, SLM, or selective laser sintering, SLS; and
a levelling roller (6b) configured to transfer powder (Pr) from the powder reservoir (6) to the surface of the thermoplastic sheet (B) in the mold die (1).

8. AM system (10) according to claim 7, further comprising:
a vibration generator (5b) coupled to the elevatable platform (5a) and
configured to vibrate the elevatable platform (5a).

9. Method (M) for performing additive manufacturing, AM, on a thermoplastic sheet (B), the method (M) comprising:
thermoforming (M1) a thermoplastic sheet (B) using a mold die (1);
performing (M2) an AM method on the thermoformed thermoplastic sheet (B) in the mold die (1) as a substrate.

10. Method (M) according to claim 9, wherein thermoforming (M1) the thermoplastic sheet (B) comprises vacuum thermoforming, mechanical thermoforming or pressure thermoforming.

11. Method (M) according to one of the claims 9 and 10, wherein the AM method comprises fused deposition modelling, FDM, selective laser melting, SLM, or selective laser sintering, SLS.

12. Method (M) according to one of the claims 9 to 11, wherein the thermoplastic sheet (B) comprises an organosheet.

13. Computer-readable medium comprising computer-executable instructions which, when executed on a data processing apparatus, cause the data processing apparatus to perform the method according to one of the claims 9 to 12.
